# FASCICULE DE BREVET EUROPEEN

(11) **EP 0 734 751 B1**
(45) Date de publication et mention de la délivrance du brevet: **22.08.2001**
(21) Numéro de dépôt: 96400638.1
(22) Date de dépôt: 26.03.1996
(51) Int. Cl.: B01D 17/02

(54) **Séparateur à cyclone ayant un coalesceur incorporé**
Zyklonabscheider mit Koaleszenzelement
Cyclone separator with coalescence element

(30) Priorité: 31.03.1995 FR 9503825
(43) Date de publication de la demande: 02.10.1996
(73) Titulaire: Cyclotech Ltd., Basingstoke, Hampshire RG24 8FB (GB)
(72) Inventeur: Seureau, Jacques, 31420 Aulon (FR); Hoyack, Mark, Fremont, CA 94538 (US)
(74) Mandataire: Mackenzie, Andrew Bryan

(56) Documents cités:
- EP-A- 0 566 432
- GB-A- 2 161 395
- US-A- 3 794 583
- US-A- 4 116 790

## Description

La présente invention est relative à un séparateur à cyclone ayant un coalesceur incorporé et, plus particulièrement, à un tel séparateur ayant un coalesceur qui est apte à constituer pour celui-ci un stade de prétraitement en amont, ainsi qu'à un ensemble comprenant une plurialité de tels séparateurs.

Des séparateurs à cyclone, plus communément appelés des hydrocyclones, sont généralement destinés à séparer deux phases immiscibles de densités différentes. Dans ce type de séparateur, le mélange des deux phases à séparer est injecté à grande vitesse dans une chambre qui est généralement cylindrique de telle façon que le mélange progresse à travers la chambre avec un mouvement giratoire. Les forces centrifuges générées par ce mouvement giratoire agissant sur le mélange des deux phases de densités différentes provoquent la migration de la phase plus dense vers la paroi de la chambre, la phase plus légère restant vers l'intérieur de la chambre. En disposant deux sorties axiales pour les phases, une vers la paroi de la chambre et l'autre le long de l'axe de la chambre, et en utilisant un arrangement de contre-pression, les deux phases peuvent être séparées. Ce principe de fonctionnement est particulièrement adapté pour séparer une émulsion huile/eau en ses deux composants. La sortie axiale de ce type de séparateur comprend généralement une partie tubulaire de faible conicité qui est raccordée à la chambre cylindrique par une partie conique. Un séparateur à cyclone à deux phases de ce type est décrit dans US-A-4.749.490.

Des séparateurs à cyclone à trois phases aptes à séparer une phase solide, par exemple du sable, qui est en suspension dans une émulsion composée, par exemple, d'huile et d'eau, sont également connus. Un tel séparateur à trois phases est décrit dans US-A-5.332.500. Les cyclones à trois phases ont en commun avec les séparateurs à deux phases une sortie pour une des phases liquides qui comprend une partie tubulaire allongée de faible conicité.

Une application principale des séparateurs à cyclone est le traitement des eaux usées issues de puits de production de pétrole et/ou de gaz. Typiquement, les séparateurs à cyclone sont utilisés sur des plates-formes maritimes de production de pétrole pour traiter le mélange huile/eau/sable qui est séparé des fluides de production dans le but de nettoyer l'eau avant son évacuation ou sa réinjection. L'espace disponible sur une plate-forme de production est très limité. Plusieurs séparateurs à cyclone sont généralement installés côte à côte dans une unité de traitement située sur la plate-forme. Cependant, la forme des parties coniques décrites antérieurement, et celle des parties tubulaires de faible conicité, signifient qu'il y a une quantité considérable d'espace perdu dans l'unité de traitement entre les différents séparateurs. En outre, il est souhaitable, dans le but d'augmenter le rendement du séparateur, de prévoir un stade de prétraitement, en amont du séparateur, pour le mélange à traiter. Dans le cas d'une émulsion huile/eau, ce stade de prétraitement comprend avantageusement un coalesceur destiné à transformer les gouttes microscopiques d'huile dans l'émulsion en gouttes plus grosses qui sont séparées plus facilement dans le cyclone. Cependant, dans le cas où l'unité de traitement doit être installée sur une plate-forme de production, de tels coalesceurs ne peuvent pas être utilisés à cause du manque d'espace disponible.

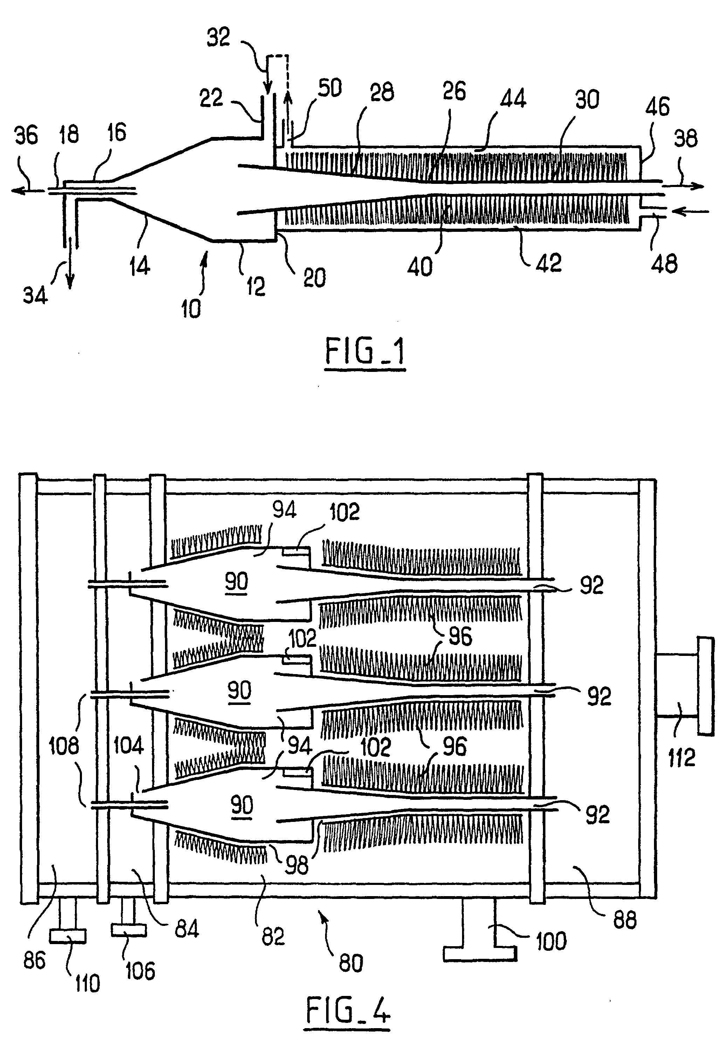

Le document US-A-4 116 790 divulgue des séparateurs à cyclone comprenant en outre des coalesceurs électrostatiques. Les électrodes peuvent être arrangées sur l'entrée tangentielle (Figs. 1-3) ou bien autour du cyclone entier (Figs. 4a, 4b). La paroi d'une chambre cylindrique entourant le cyclone, la partie conique du cyclone, ainsi qu'un élément conique entourant la tubulaire de sortie peuvent constituer des électrodes.

L'objet de la présente invention est par conséquent de proposer un séparateur à cyclone ayant un coalesceur en amont pour prétraiter l'émulsion à séparer, mais qui est plus compact que les dispositifs proposés précédemment et réduit donc l'espace perdu, ainsi qu'un ensemble comprenant une pluralité de tels séparateurs.

Suivant un premier aspect de l'invention, il est proposé un séparateur à cyclone tel que défini dans la revendication 1, des modes particuliers étant définis dans les revendications 2-4.

Selon un deuxième aspect de l'invention, il est proposé un ensemble de séparateurs, comprenant une pluralité de séparateurs à cyclone, tel que défini dans la revendication 5,des models particuliers étant l'objet des revendications 6-10.

La présente invention va maintenant être décrite à titre d'exemple seulement, en se référant aux dessins annexés, dans lesquels la

Figure 1 est une vue schématique en section transversale d'un séparateur à cyclone ayant un coalesceur incorporé, suivant une première variante de l'invention; les

Figures 2 et 3 sont des vues schématiques en section transversale de séparateurs suivant une deuxième et une troisième variantes de l'invention; les

Figures 2a et 3a sont des vues détaillées de parties des séparateurs des Figures 2 et 3 respectivement; et la

Figure 4 est une vue schématique en section transversale d'un ensemble de séparateurs suivant une autre variante de l'invention.

La Figure 1 est une vue en coupe transversale d'un séparateur à cyclone à trois phases qui comprend un corps 10 constitué d'une partie cylindrique 12 et d'une partie conique 14. La partie conique 14 est pourvue, au sommet du cône, d'un tronçon final cylindrique 16 à l'intérieur duquel est disposée une sortie tubulaire 18, les deux étant situés coaxialement à la partie cylindrique 12.

Le corps 10 est fermé par un élément annulaire 20 qui comprend une ou plusieurs entrée (s) 22 pour l'émulsion à traiter dans le cyclone. L'entrée est disposée tangentiellement par rapport à la partie cylindrique 12. Dans l'ouverture de l'élément annulaire est monté de façon étanche un élément généralement tubulaire 26 qui comprend une partie de faible conicité 28 et une extension cylindrique 30.

Une émulsion huile/eau contenant une matière solide en suspension entre dans le corps sous pression à travers l'entrée 22 dans la direction de la flèche 32 et emprunte ainsi un chemin tangentiel au corps 10. L'émulsion s'écoule à grande vitesse en un mouvement giratoire à l'intérieur de la partie cylindrique 12. Sous l'effet de la force centrifuge ainsi générée, la matière solide en suspension migre vers les parois de la partie cylindrique 12 et de la partie conique 14 et est évacuée à travers le tronçon final 16, dans la direction de la flèche 34.

La configuration conique de la partie 14 force l'émulsion huile/eau, de laquelle la matière solide a été retirée, à changer sa direction longitudinale d'écoulement et à passer dans l'élément tubulaire 26 tout en continuant à s'écouler dans son mouvement giratoire. Les deux phases de l'émulsion se séparent pendant son passage le long de la partie de faible conicité 28, l'eau se trouvant vers la paroi des parties 28 et 30, tandis que l'huile se déplace vers l'axe de celle-ci. Une contre-pression provoquée par une restriction formée à l'extrémité de l'extension tubulaire 30 (non montrée) s'applique à l'écoulement d'huile et l'entraîne à inverser sa direction. Un courant d'huile est donc formé pour s'écouler dans une direction opposée à celle de l'eau, et l'huile quitte le séparateur à travers la sortie 18 dans la direction de la flèche 36, l'eau purifiée quittant l'extension tubulaire 30 dans la direction de la flèche 38.

Suivant le premier aspect de l'invention, un coalesceur, c'est à dire des moyens de coalescence 40, est disposé autour de et monté directement sur l'élément tubulaire 20, substantiellement le long de toute la longueur de celui-ci. Dans l'exemple montré, le coalesceur est du type à brosse et est composé d'un grand nombre de poils, faits de matière oléophile, qui se projettent généralement radialement à partir de la paroi extérieure de l'élément tubulaire 20. De préférence, la matière oléophile utilisée est une matière plastique telle que du polyamide ou du polypropylène. Un manchon cylindrique 42 est situé autour du coalesceur et définit avec l'élément annulaire 20 une chambre de coalescence 44. L'extension cylindrique 30 se projette à travers une paroi d'extrémité 46 du manchon cylindrique 42. Le manchon cylindrique 42 comprend une entrée 48 et une sortie 50 qui communique directement avec l'entrée 22 du séparateur à cyclone. Le manchon cylindrique peut être formé par les parois du récipient contenant le séparateur à cyclone.

En marche, l'émulsion à traiter est injectée dans l'entrée 48 de la chambre de coalescence 44 où elle progresse le long de la longueur de l'élément tubulaire 26, touchant les brosses oléophiles du coalesceur 40, avant de sortir de la chambre par la sortie 50. Pendant son passage à travers la chambre de coalescence 44, le contact entre l'émulsion et les brosses oléophiles entraîne les gouttelettes microscopiques d'huile dans l'émulsion à coalescer et à former des gouttelettes dont le diamètre moyen a été considérablement augmenté. Ces gouttelettes restent en suspension dans l'émulsion lorsqu'elle quitte la chambre de coalescence 44 par la sortie 50.

L'émulsion prétraitée, contenant les gouttelettes d'huile grossies, est alors injectée dans le séparateur à cyclone à travers l'entrée 22 où elle suit le chemin décrit ci-dessus. Cependant, tandis que le diamètre moyen des gouttelettes d'huile est significativement plus grand que dans une émulsion non traitée, le rendement du cyclone est considérablement augmenté, le pourcentage d'huile retiré de l'émulsion étant augmenté d'approximativement 5 à 20 % en fonction des caractéristiques de l'émulsion qui entre.

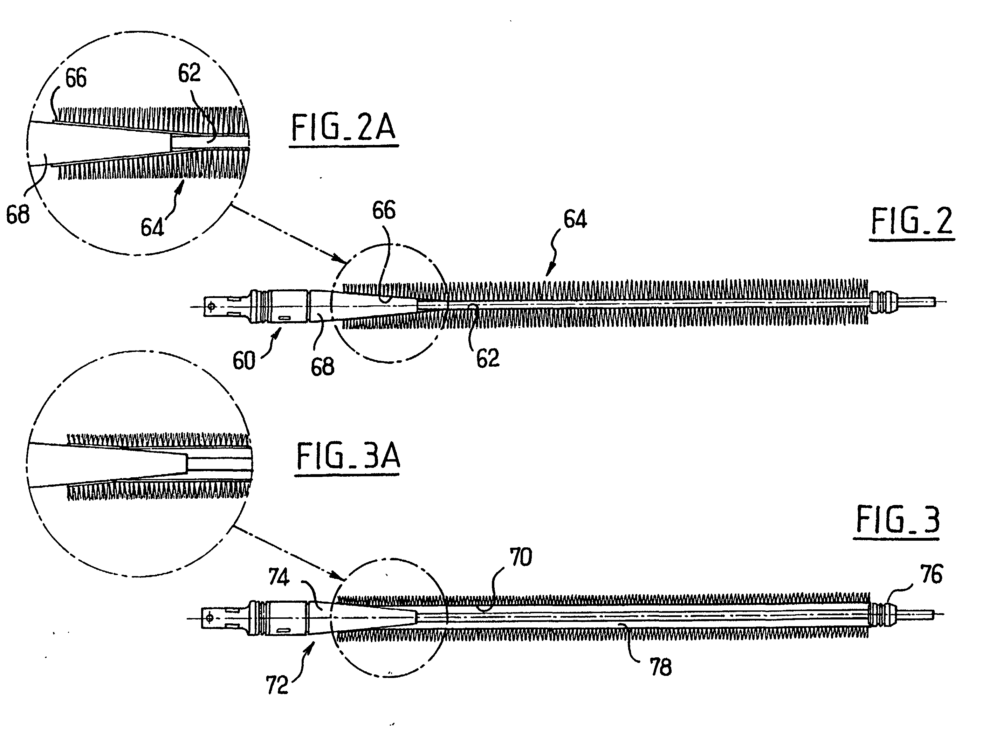

On a montré dans la Figure 2 une deuxième variante d'un séparateur à cyclone selon le premier aspec de l'invention dans lequel, dans un souci de facilité de fabrication et d'entretien, le coalesceur est constitué comme un sous-ensemble séparé qui peut être monté sur un cyclone existant. Dans la variante présentée, un séparateur à cyclone 60, qui dans l'exemple illustré est un cyclone à deux phases, a un ensemble de coalesceurs, c'est à dire de moyens de coalescence 64, disposé autour de l'élément tubulaire 62, qui comprend un manchon généralement tubulaire 66 dont les dimensions internes correspondent exactement aux dimensions extérieures de l'élément tubulaire 62 et de la partie conique 68, les moyens coalescents étant montés sur le manchon. Le manchon tubulaire 66 est plus clairement visible dans la Figure 2a. Le fonctionnement du cyclone et du stade de prétraitement en amont constitué par le coalesceur est similaire à celui de la variante de la Figure 1.

On a montré dans les Figures 3 et 3a une autre variante de cyclone qui diffère de celle des Figures 2 et 2a en ce que le manchon tubulaire sur lequel est monté le coalesceur à brosse a une section transversale cylindrique constante. Comme cela est montré dans les figures, un manchon tubulaire 70, de section transversale constante, est monté sur le séparateur à cyclone 72 entre la partie conique 74 et un injecteur 76 à l'extrémité de l'élément tubulaire 78. Le fonctionnement du cyclone et du coalesceur de prétraitement en amont est similaire à celui des variantes des Figures 1 et 2, l'élément tubulaire et le coalesceur étant insérés dans un manchon tubulaire (non montré), comme dans le cas du dispositif de la Figure 1.

La Figure 4 montre une variante selon le second aspect de l'invention qui diffère de celles décrites précédemment en ce que plusieurs séparateurs à cyclone, avec leurs coalesceurs associés, sont disposés dans une chambre commune contenant l'émulsion à traiter.

Comme cela est montré dans la Figure 4, un ensemble de séparateurs, désigné d'une manière générale par 80, est divisé en chambres 82, 84, 86, 88, chacune séparée de la chambre voisine par une paroi de séparation. La chambre principale ou d'alimentation 82 contient plusieurs séparateurs à cyclone, trois dans l'exemple illustré, disposés côte à côte. Sur la surface extérieure de la partie tubulaire 92 de chaque séparateur 90, et sur la surface extérieure du corps 94 de chaque séparateur, sont montés des coalesceurs à brosse 96. Les coalesceurs, c'est à dire les moyens de coalescence 96, peuvent être soit directement montés sur les séparateurs à cyclone, soit peuvent être montés sur des manchons tubulaires comme cela est montré.

La chambre d'alimentation 82 comprend une entrée 100 pour l'émulsion à traiter. L'émulsion entre dans la chambre 82, passe sur et à travers les coalesceurs à brosse, et entre dans les entrées 102 des séparateurs à cyclone 90. Après le traitement dans les séparateurs 90, le sable passe des sorties 104 dans la chambre à sable 84 qu'il quitte par la sortie 106; l'huile quitte les séparateurs 90 par les sorties 108 qui s'ouvrent dans la chambre à huile 86 qu'elle quitte par la sortie 110; et l'eau propre quitte les parties tubulaires 92 et passe dans la chambre à eau propre qu'elle quitte par la sortie 112.

Pendant son passage à travers la chambre d'alimentation 82, l'émulsion, qui se déplace relativement lentement, entre en contact avec un grand nombre de poils des coalesceurs à brosse 96 entraînant les gouttelettes d'huile contenues dans l'émulsion à coalescer et à former de plus grosses gouttelettes dont le diamètre moyen est significativement plus grand.

Chacune des variantes de la présente invention décrite ci-dessus, en assurant que l'huile dans l'émulsion à traiter est au moins partiellement séparée de l'émulsion, et comprend des gouttelettes ayant un plus grand diamètre moyen, avant son entrée dans le cyclone, améliore considérablement le rendement du séparateur à cyclone tout en n'augmentant pas le volume total de l'unité de séparateur.

## Revendications

1. Séparateur à cyclone comprenant un corps (10) constitué d'une partie cylindrique (12) et d'une partie convergente substantiellement conique (14), d'au moins une entrée (22) montée tangentiellement sur la partie cylindrique (12) et d'un élément substantiellement tubulaire (26; 62; 78) coaxial à la partie cylindrique (12) du corps et monté sur le corps et en communication hydraulique avec celui-ci, le séparateur comprenant en outre des moyens de coalescence (40; 64) disposés autour de l'élément tubulaire et aptes à recevoir du liquide à séparer avant son entrée dans le cyclone, les dits moyens de coalescence étant montés directement sur l'élément tubulaire, ou sur un manchon tubulaire (66;70) monté sur l'élément tubulaire.

2. Séparateur à cyclone suivant la revendication 1,
caractérisé en ce que les dits moyens de coalescence sont du type à brosse.

3. Séparateur à cyclone suivant la revendication 2, caractérisé en ce que les dits moyens de coalescence comprennent une pluralité de poils composés de matière oléophile.

4. Séparateur à cyclone suivant l'une quelconque des revendications précédentes, caractérisé en ce qu'il comprend en outre des moyens de coalescence disposés autour de son corps (10).

5. Ensemble de séparateurs comprenant une pluralité de séparateurs à cyclone, chacun des dits séparateurs à cyclone comprenant un corps (94) constitué d'une partie cylindrique et d'une partie convergente substantiellement conique, d'au moins une entrée (102) montée tangentiellement sur la partie cylindrique et d' élément substantiellement tubulaire (92) coaxial à la partie cylindrique du corps et monté sur le corps et en communication hydraulique avec celui-ci, chacun des dits séparateurs à cyclone comprenant en outre des moyens de coalescence (96) disposés autour de l'élément tubulaire et aptes à recevoir du liquide à séparer avant son entrée dans le cyclone, les dits séparateurs étant disposés dans une chambre commune (82), apte à recevoir une émulsion à traiter, qui communique directement avec les entrées (102) des séparateurs.

6. Ensemble de séparateurs suivant la revendication 5,
caractérisé en ce que les moyens de coalescence sont du type à brosse.

7. Ensemble de séparateurs suivant la revendication 6,
caractérisé en ce que les moyens de coalescence comprennent une pluralité de poils composés de matière oléophile.

8. Ensemble de séparateurs suivant la revendication 5, 6, ou 7, caractérisé en ce que les moyens de coalescence sont montés directement sur les éléments tubulaire.

9. Ensemble de séparateurs suivant la revendication 5,6 ou 7, caractérisé en ce que les moyens de coalescence comprennent chacun un manchon tubulaire monté sur l'élément tubulaire.

10. Ensemble de séparateurs suivant l'une quelconque des revendications 5-9, caractérisé en ce que les dits séparateurs à cyclone comprennent chacun en outre les moyens de coalescence disposés autour de leurs corps (94).

## Patentansprüche

1. Zyklonabschelder umfassend einen Körper (10) bestehend aus einem zylindrischen Teil (12) und einem sich verengenden im Wesentlichen konischen Teil (14), aus mindestens einem tangential auf den zylindrischen Teil (12) montierten Eintritt (22) und aus einem im Wesentlichen röhrenförmigen Element (26; 62; 78), das koaxial zum zylindrischen Teil (12) des Körpers angeordnet und an dem Körper montiert ist und mit diesem in hydraulischer Verbindung steht, wobei der Abscheider außerdem um das röhrenförmige Element herum angeordnete Koaleszenzmittel (40, 64) zur Aufnahme von zu trennender Flüssigkeit vor deren Eintritt in den Zyklon umfaßt, wobei die Koaleszenzmittel direkt am röhrenförmigen Element oder auf eine röhrenförmige, auf das röhrenförmige Element montierte Muffe (66, 70) angebracht sind.

2. Zyklonabscheider nach Anspruch 1, dadurch gekennzeichnet, dass die Koaleszenzmittel von der Art einer Bürste sind.

3. Zyklonabscheider nach Anspruch 2, dadurch gekennzeichnet, dass die Koaleszenzmittel eine Vielzahl von Borsten aus einem ölfreundlichen Material umfassen.

4. Zyklonabscheider nach einem der vorangehenden Ansprüche, dadurch gekennzeichnet, dass er zusätzlich Koaleszenzmittel umfasst, die um seinen Körper (10) herum angeordnet sind.

5. Abscheideranordnung umfassend eine Vielzahl von Zyklonabscheidern, wobei jeder der Zyklonabscheider einen Körper (94) umfasst, bestehend aus einem zylindrischen Teil und aus einem sich verengenden im Wesentlichen konischen Teil, aus mindestens einem tangential auf den zylindrischen Teil montierten Eintritt (102) und aus einem im Wesentlichen röhrenförmigen Element (92), das koaxial zum zylindrischen Teil des Körpers angeordnet und an dem Körper montiert ist und mit diesem in hydraulischer Verbindung steht, wobei jeder der Zyklonabscheider außerdem um das röhrenförmige Element herum angeordnete Koaleszenzmittel zur Aufnahme von zu trennender Flüssigkeit vor deren Eintritt in den Zyklon umfaßt, wobei die Abscheider zur Aufnahme einer zu behandelnden Emulsion in einer gemeinsamen, direkt mit den Eintritten (102) der Abscheider kommunizierenden Kammer (82) angeordnet sind.

6. Abscheideranordnung nach Anspruch 5, dadurch gekennzeichnet, dass die Koaleszenzmittel von der Art einer Bürste sind.

7. Abscheideranordnung nach Anspruch 6, dadurch gekennzeichnet, dass die Koaleszenzmittel eine Vielzahl von Borsten aus einem ölfreundlichen Material umfassen.

8. Abscheideranordnung nach Anspruch 5, 6 oder 7, dadurch gekennzeichnet, dass die Koaleszenzmittel direkt auf die röhrenförmigen Elemente montiert sind.

9. Abscheideranordnung nach Anspruch 5, 6 oder 7, dadurch gekennzeichnet, dass die Koaleszenzmittel jeweils eine auf ein röhrenförmiges Element montierte röhrenförmige Muffe umfassen.

10. Abscheideranordnung nach einem der Ansprüche 5 bis 9, dadurch gekennzeichnet, dass dle Zyklonabscheider außerdem jeweils Koaleszenzmittel umfassen, die um ihre Körper (94) herum angeordnet sind.

## Claims

1. A cyclone separator comprising a body (10), formed of a cylindrical portion (12) and a substantially conical convergent portion (14), at least one inlet (22) mounted tangentially on the cylindrical portion (12) and a substantially tubular element (26; 62; 78) coaxial to the cylindrical portion (12) of the body and mounted on the body and in hydraulic communication therewith, the separator also comprising coalescence means (40; 64) disposed around the tubular element and suitable for receiving liquid to be separated before its entry into the cyclone, the said coalescence means being directly mounted on the tubular element, or on a tubular sleeve (66; 70) mounted on the tubular element.

2. A cyclone separator according to Claim 1,
**characterised in that** the said coalescence means are of the brush type.

3. A cyclone separator according to Claim 2,
**characterised in that** the said coalescence means comprise a plurality of hairs made from oil-absorbing material.

4. A cyclone separator according to any one of the preceding Claims,
**characterised in that** it also comprises coalescence means disposed around its body (10).

5. An assembly of separators comprising a plurality of cyclone separators, each of the said cyclone separators comprising a body (94) formed from a cylindrical portion and a substantially conical convergent portion, at least one inlet (102) mounted tangentially on the cylindrical portion and a substantially tubular element (92) coaxial to the cylindrical portion of the body and mounted on the body and in hydraulic communication therewith, each of the said cyclone separators also comprising coalescence means (96) disposed around the tubular element and suitable for receiving liquid to be separated before its entry into the cyclone, the said separators being disposed in a common chamber (82), suitable for receiving an emulsion to be treated, which directly communicates with the inlets (102) of the separators.

6. An assembly of separators according to Claim 5,
**characterised in that** the coalescence means are of the brush type.

7. An assembly of separators according to Claim 6,
**characterised in that** the coalescence means comprise a plurality of hairs made from oil-absorbing material.

8. An assembly of separators according to Claim 5, 6, or 7,
**characterise in that** the coalescence means are mounted directly on the tubular elements.

9. An assembly of separators according to Claim 5, 6 or 7,
**characterised in that** the coalescence means each comprise a tubular sleeve mounted on the tubular element.

10. An assembly of separators according to any one of Claims 5-9,
**characterised in that** the said cyclone separators each also comprise coalescence means disposed around their body (94).
